# EUROPÄISCHE PATENTSCHRIFT

(11) **EP 1 060 657 B1**
(45) Veröffentlichungstag und Bekanntmachung des Hinweises auf die Patenterteilung: **03.12.2003**
(21) Anmeldenummer: 00111933.8
(22) Anmeldetag: 15.06.2000
(51) Int. Cl.: A01J 5/007

(54) **Verfahren zum maschinellen Melken von Tieren, insbesondere von Schafen**
Method of machinally milking animals, particularly sheep
Méthode de traite d'animaux à la machine, en particulier des brebis

(30) Priorität: 17.06.1999 DE 19927717
(43) Veröffentlichungstag der Anmeldung: 20.12.2000
(73) Patentinhaber: WestfaliaSurge GmbH, 59302 Oelde (DE)
(72) Erfinder: Schulze-Wartenhorst, Bernhard, 48231 Warendorf (DE)
(74) Vertreter: Neumann, Ditmar

(56) Entgegenhaltungen:
- WO-A-95/09526
- DE-A- 3 047 579
- DE-A- 3 621 666

## Beschreibung

Der Gegenstand der Patentanmeldung bezieht sich auf ein Verfahren zum maschinellen Melken von Tieren, insbesondere von Schafen.

Durch die DE 36 21 666 C2 ist ein Verfahren zum maschinellen Melken von Kühen bekannt, bei dem durch mit Unterdruckleitung in Verbindung stehende Melkbecher pulsierend auf die Zitzen des zu melkenden Tieres eingewirkt wird und der Hauptmelkphase eine Stimulationsphase vorgeschaltet ist, die aus einer Reizphase, in der stimulierend auf die Zitzen eingewirkt wird, und einer Ruhephase besteht. Die Zeitdauer der Reizphase nimmt mit fortschreitendem Laktationsstadium des Tieres zu. Die Zeitdauer der Ruhephase nimmt hingegen ab. Durch dieses Verfahren wird die Melkbereitschaft der Kuh gesteigert.

Zur Steigerung der Melkbereitschaft eines Tieres beschreibt die DE 30 47 579 C2 ein Verfahren, bei dem eine Stimulationsphase 40 bis 90 sec. ab Beginn der Stimulation dauert, wobei während der Stimulationsphase die Pulsation des Zitzengummis mit einer um wenigstens 50 % gegenüber der Frequenz der Hauptmelkphase erhöhten Frequenz erfolgt.

Obwohl im Regelfall durch eine Stimulationsphase die Milchleistung eines Tieres gesteigert werden kann, besteht bei Tieren die Möglichkeit, daß es noch während der Stimulationsphase zu einem Rückgang der Melkwilligkeit des Tieres kommt. Das Tier wird bereits während der Stimulationsphase unruhig. Dies kann auch dazu führen, daß das Tier das Melkzeug abschlägt.

Hiervon ausgehend, liegt der vorliegenden Erfindung die Zielsetzung zugrunde, das bekannte Verfahren zum maschinellen Melken von Tieren so weiterzuentwikkeln, daß das Tierverhalten positiv verändert und die Melkwilligkeit gesteigert wird.

Diese Zielsetzung wird durch das erfindungsgemäße Verfahren mit den Merkmalen des Anspruchs 1 erreicht. Vorteilhafte Weiterbildungen und Ausgestaltungen des Verfahrens sind Gegenstand der abhängigen Ansprüche.

Das erfindungsgemäße Verfahren zum maschinellen Melken von Tieren, insbesondere von Schafen, zeichnet sich dadurch aus, daß während einer Vormelkphase ein Teil der Milch aus der Euterzisterne abgemolken wird. Danach wird wenigstens eine Zitze des Tieres während einer Stimulationsphase stimuliert. Der Stimulationsphase ist eine Melkphase nachgeschaltet.

Der erfindungsgemäßen Ausgestaltung liegt die Überlegung zugrunde, daß der zur Verfügung stehende Stapelraum im Euterbereich zu klein ist, so daß es innerhalb des Euters zu einem für das Tier als unangenehm empfundenen Druckanstieg kommt, wenn Milch aus dem Alveolarbereich frei wird. Dieser Effekt tritt insbesondere im ersten Laktationsbereich auf, wenn die Milchleistung des Tieres ihren Höhepunkt aufweist. Auf den Druckanstieg innerhalb des Euters reagiert der Organismus des Tieres durch Ausschüttung des Hormons Adrenalin, wodurch die Wirkung von Ocytocin aufgehoben und damit zwar der hohe Euterinnendruck abgebaut wird, jedoch auch die Melkwilligkeit des Tieres abnimmt. Dem entgegen wirkt das erfindungsgemäße Verfahren zum maschinellen Melken von Tieren, da der zur Verfügung stehende Stapelraum im Euterbereich während der Vormelkphase vergrößert wird, da ein Teil der Milch aus der Euterzisterne abgemolken wird. Überraschenderweise ist festgestellt worden, daß diese Verfahrensführung insbesondere bei kleinen Wiederkäuern, insbesondere bei Schafen, zu einer positiven Veränderung des Tieresverhaltens führt, da es nicht mehr zu Wohlbefindlichkeitsstörungen des Tieres kommt. Hierdurch wird die Akzeptanz des Tieres gegenüber einem maschinellen Melken erhöht und als Ergebnis das Melkresultat hinsichtlich Ergiebigkeit, Melkgeschwindigkeit und Ausmelkgrad verbessert.

Gemäß einer vorteilhaften Weiterbildung des Verfahrens wird vorgeschlagen, daß die Vormelkphase wenigstens eine Dauer von 5, vorzugsweise 7 sec., insbesondere von 15 sec. hat. Während dieser Vormelkphase wird ein ausreichend hohes Melkvolumen abgemolken, was dazu führt, daß der Euterinnendruck durch die sich anschließende Stimulationsphase sich nicht soweit erhöht, daß dieser durch das Tier als unangenehm empfunden wird.

Gemäß einer noch weiteren vorteilhaften Ausbildung des Verfahrens wird vorgeschlagen, daß die Vormelkphase höchstens eine Dauer von ca. 20 sec., vorzugsweise ca. 30 sec. beträgt. Das Tier, insbesondere das Schaf, welches einer Vormelkphase ausgesetzt wird, erlebt diese Vormelkphase noch nicht allzu unangenehm. An die Vormelkphase schließt sich eine für das Tier als angenehm zu bewertende Stimulationsphase an.

Gemäß einer noch weiteren vorteilhaften Ausgestaltung des Verfahrens wird vorgeschlagen, daß während der Stimulationsphase eine taktile Reizung der Zitze erfolgt. Vorzugsweise erfolgt die taktile Reizung der Zitze während der Stimulationsphase durch die Pulsation des Zitzengummis eines Melkbechers. Hierzu ist der Melkbecher, der einen Zitzengummi aufweist, mit einem Pulsator verbunden, wobei die Pulsatorfrequenz wenigstens 300 Zyklen pro Minute beträgt. Bei einem Pulsverhältnis von 50 : 50 (Melken - Entlasten) führt die Erhöhung der Pulsatorfrequenz zu einer leichten Vakuumreduzierung im Melkbecherzwischenraum gegenüber dem Melkbecherinnenraum. Dadurch legt sich das Zitzengummi auch in der Vormelkphase leicht an die Zitze. Das nun leicht geschlossene Zitzengummi führt auch dazu, daß in dieser Phase ein Klettern des Zitzengummis samt Melkbecherhülse aufgrund des Kontaktes von Zitze zu Zitzengummi unterbunden wird.

Hierdurch wird eine verbesserte Positionierung des Melkbechers an der Zitze erreicht.

Vorteilhafterweise beträgt die Druckdifferenz zwischen Zitzenbecherinnenraum und Zitzenbecherzwischenraum mindestens 5 kPa. Diese Druckdifferenz ist ausreichend, um das Zitzengummi zu bewegen. Vorzugsweise wird diese Verfahrensweise beim Melken von Schafen angewandt. Nach Ablauf der Stimulationsphase erfolgt die Hauptmelkphase.

Gemäß einer noch weiteren vorteilhaften Weiterbildung des Verfahrens wird vorgeschlagen, daß sich die Vormelkphase (V) hinsichtlich der Melkparameter, insbesondere hinsichtlich der Zeitdauer, der Pulsatorfrequenz und/oder der Pulsatorphasensteuerung, von denen der Melkphase (H) unterscheidet. Die Dauer der Vormelkphase bzw. der Melkphase ist vorzugsweise tierindividuell eingestellt.

Um eine einfache Steuerung des Pulsators zu gewährleisten, wäre es denkbar, eine unabhängig vom Starten des Pulsators, immer wiederkehrende Stimulationsphase zu programmieren, so daß eine Einzelsteuerung der Pulsation entfallen könnte.

Alternativ zu einer taktilen Reizung über einen Pulsator und das Melkzeug wird gemäß einer noch weiteren vorteilhaften Ausgestaltung des Verfahrens vorgeschlagen, daß ein Melkzeug mit wenigstens einem Melkbecher, der über eine Leitung mit einem Milchsammelstück verbunden ist, an das Tier angelegt. Das Milchsammelstück wird mit einem Arbeitszylinder verbunden. Der Arbeitszylinder, welcher druckluft- oder vakuumgesteuert sein kann, wobei ein druckluftgesteuerter Arbeitszylinder bevorzugt wird, stellt eine tierindividuelle Position des Melkzeugs ein und startet dann eine pendelnde Belastung durch Zug und Druck vom Arbeitszylinder auf das Milchsammelstück. Diese Bewegung hat eine stimulierende Wirkung auf das Tier. Die Dauer der Stimulationsphase kann tierindividuell erfolgen.

Nach einer noch weiteren vorteilhaften Ausgestaltung des Verfahrens wird vorgeschlagen, daß auf eine Melkphase eine weitere Stimulationsphase folgt, an die sich eine weitere Melkphase anschließt. Entsprechend einer vorgegebenen Gesamtmelkzeit, die tierindividuell eingestellt sein kann, können sich Stimulationsphasen mit Melkphasen abwechseln. Es ist überraschenderweise festgestellt worden, daß die weiteren Stimulationen des Tieres zu positiven Melkergebnissen führen. Insbesondere kann die Milchleistung erhöht werden, ohne daß die Melkwilligkeit des Tieres darunter leidet.

Diese Verfahrensführung hat auch den Vorteil, daß die einzelnen Melkplätze zentral gesteuert werden können. Insbesondere kann die Pulsatorfrequenz zentral gesteuert werden, ohne daß einzelne Melkplätze mit besonderen Steuereinrichtungen versehen werden müssen. Dies verringert den technischen und wirtschaftlichen Aufwand zur Umsetzung des Verfahrens. Bei dieser Verfahrensführung wechseln sich Melkphase und Stimulationsphase ab, so daß die Melkphase beim Ansetzen des Melkzeugs an die Zitzen des Tieres die Funktion der Vormelkphase übernimmt.

Gemäß einer noch weiteren vorteilhaften Ausgestaltung des Verfahrens wird vorgeschlagen, daß die Zeitdauer der einzelnen Stimulationsphase und/oder die Zeitdauer der einzelnen Melkphasen im wesentlichen gleich groß sind.

Gemäß einer noch weiteren vorteilhaften Ausgestaltung des Verfahrens wird vorgeschlagen, daß die Zeitdauer der Vormelkphase im wesentlichen der Zeitdauer der Stimulationsphase und/oder der Zeitdauer der Melkphase bzw. Melkphasen entspricht. Insbesondere wird vorgeschlagen, daß die Zeitdauer der Vormelkphase, der Stimulationsphase und der Melkphase bzw. Melkphasen ca. 7 sec. betragen.

Gemäß einer noch weiteren vorteilhaften Ausgestaltung des Verfahrens wird vorgeschlagen, daß das Verhältnis zwischen einer Stimulationsphase und einer Melkphase ca. 2 : 1 beträgt.

Weitere Einzelheiten und Vorteile des Verfahrens werden anhand der in der Zeichnung dargestellten Diagramme erläutert.
- Figur 1: zeigt schematisch ein Diagramm der Pulsfrequenz in Abhängigkeit von der Zeit mit einer Vormelkphase, einer Stimulationsphase und einer Melkphase und
- Figur 2: schematisch die Pulsatorfrequenz in Abhängigkeit von der Zeit mit einer Vormelkphase und sich abwechselnden Stimulations- und Melkphasen.

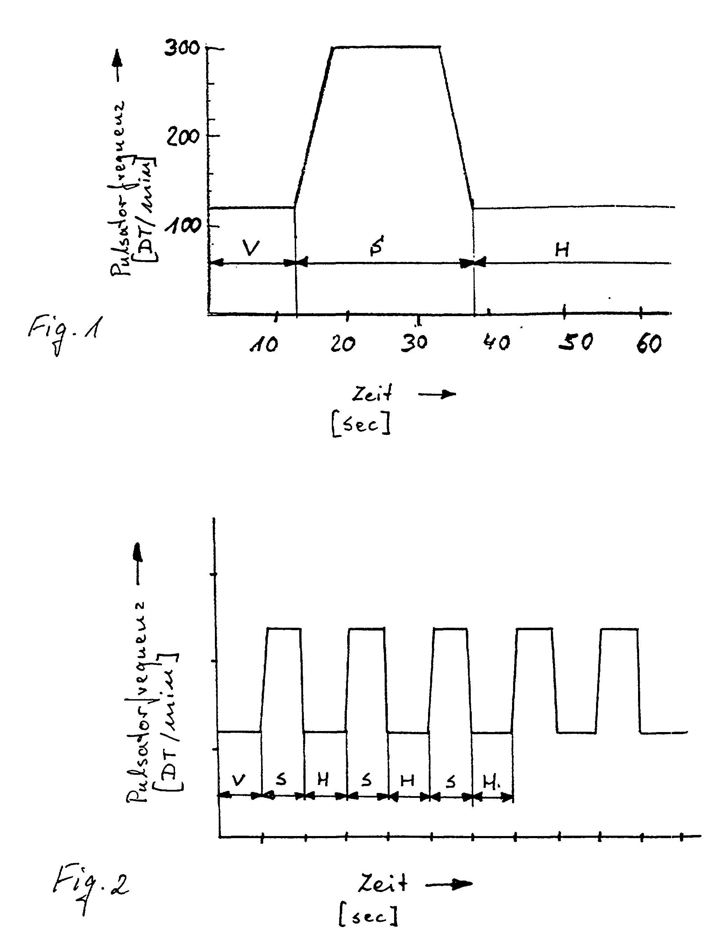

Figur 1 zeigt ein Diagramm, in dem die Pulsfrequenz in Abhängigkeit von der Zeit dargestellt ist. Das Diagramm zeigt eine Vormelkphase V, auf die eine Stimulationsphase S folgt. An diese schließt sich eine Melkphase H an.

Innerhalb einer Vormelkphase V, welche für eine vorgegebene Zeitspanne eingestellt ist, wirkt eine erste Pulsatorfrequenz, die bei ca. 120 Zyklen pro Minute liegt. Während der Vormelkphase V wird ein Teil der Milch aus der Euterzisterne abgemolken. Nach Ablauf der vorgegebenen Vormelkphase erfolgt eine Stimulationsphase S. Hierbei wird die Pulsatorfrequenz auf ca. 300 Zyklen pro Minute erhöht. Die Pulsatorfrequenz kann auch auf eine Frequenz eingestellt werden, die oberhalb von 300 Zyklen pro Minute liegen kann. Die Stimulationsphase S wirkt vorzugsweise für eine Zeitspanne von ca. 7 bis 20 sec. Während der Stimulationsphase wird im wesentlichen keine Milch abgemolken. Nach der Stimulationsphase S erfolgt die Melkphase H, in der das Tier ausgemolken wird. Das Diagramm der Figur 1 zeigt schematisch den Verlauf der Pulsatorfrequenz über der Zeit. Andere Verläufe sind möglich. Der in dem Diagramm dargestellte Verlauf der Pulsatorfrequenz in Abhängigkeit von der Zeit ist ein bevorzugter Verlauf zum maschinellen Melken von Schafen.

Figur 2 zeigt ein zweites Diagramm einer Pulsfrequenz in Abhängigkeit von der Zeit. Aus dem Diagramm ist ersichtlich, daß der Melkvorgang nach dem Ansetzen des Melkzeugs an die Zitzen des Tieres durch eine Vormelkphase V ausgelöst wird. Die Zeitspanne, innerhalb der während der Vormelkphase ein Teil der Milch aus der Euterzisteme abgemolken wird, kann frei eingestellt werden. Während der Vormelkphase liegt vorzugsweise eine Pulsatorfrequenz von ca. 120 Zyklen pro Minute an. Auf die Vormelkphase folgt eine erste Stimulationsphase S. Hierbei liegt die Pulsatorfrequenz vorzugsweise bei ca. 300 Zyklen pro Minute. Die Stimulationsphase hat eine vorgegebene Zeitdauer. An die Stimulationsphase schließt sich eine erste Melkphase an. Die Pulsatorfrequenz während der Melkphase entspricht vorzugsweise der Pulsatorfrequenz während der Vormelkphase. Auf die Melkphase folgt eine weitere Stimulationsphase S. Weitere Melkphasen und Stimulationsphasen können während eines Melkvorgangs erfolgen.

Vorzugsweise ist die Zeitdauer, die die Vormelkphase, die Stimulationsphasen und die Melkphasen aufweisen, gleich groß. Insbesondere wird vorgeschlagen, daß die Zeitdauer der einzelnen Phasen bei ca. 7 sek. liegt. Die in der Figur 2 dargestellte Abhängigkeit der Pulsatorfrequenz von der Zeit ist inbesondere dann vorteilhaft, wenn die Pulsatorfrequenz einzelner Melkplätze zentral gesteuert wird.

## Patentansprüche

1. Verfahren zum maschinellen Melken von Tieren, insbesondere von Schafen, bei dem während einer Vormelkphase (V) ein Teil der Milch aus der Euterzisterne abgemolken wird, danach wenigstens eine Zitze des Tieres während einer Stimulationsphase (S) stimuliert wird, und bei dem der Stimulationsphase (S) eine Melkphase (H) nachgeschaltet ist.

2. Verfahren nach Anspruch 1, bei dem die Vormelkphase wenigstens eine Dauer von 5 sec., vorzugsweise 7 sec. hat.

3. Verfahren nach Anspruch 1 oder 2, bei dem die Vormelkphase höchstens eine Dauer von 30 sec. hat.

4. Verfahren nach Anspruch 1, 2 oder 3, bei dem die während der Stimulationsphase (S) eine taktile Reizung der Zitze erfolgt.

5. Verfahren nach Anspruch 4, bei dem während der Stimulationsphase (S) ein Melkbecher mit einem Pulsator verbunden ist, wobei die Pulsatorfrequenz wenigstens 300 Zyklen pro Minute beträgt.

6. Verfahren nach Anspruch 6, bei dem während der Stimulationsphase (S) eine Druckdifferenz von mindestens 5 kPa zwischen Zitzenbecherinnenraum und Zitzenbecherzwischenraum ausgebildet wird.

7. Verfahren nach einem der Ansprüche 1 bis 6, bei dem die Vormelkphase (V) hinsichtlich der Zeitdauer, der Pulsatorfrequenz und/oder der Pulsatorphasensteuerung unterschiedlich zur Melkphase (H) ausgeführt wird.

8. Verfahren nach Anspruch 1, 2 oder 3, bei dem ein Melkzeug mit wenigstens einen Melkbecher, der über eine Leitung mit einem Milchsammelstück verbunden ist, an das Tier angelegt wird, wobei das Milchsammelstück mit einem Arbeitszylinder so verbunden wird, daß eine Bewegung des Milchsammelstücks an den Melkbecher übertragen wird.

9. Verfahren nach einem der Ansprüche 1 bis 7, bei dem auf eine Melkphase (H) eine weitere Stimulationsphase (S) auf die eine weitere Melkphase (H) folgt.

10. Verfahren nach Anspruch 9, bei dem die Zeitdauer der einzelnen Stimulationsphasen (S) und/oder die Zeitdauer der einzelnen Melkphasen (H) im wesentlich gleich groß sind.

11. Verfahren nach Anspruch 9, bei dem das Zeitverhältnis zwischen Stimulations- und Melkphase ca. 2 : 1 beträgt.

12. Verfahren nach Anspruch 9 oder 10, bei dem die Zeitdauer der Vormelkphase (S) im wesentlichen der Zeitdauer der Stimulationsphase (S) und/oder der Zeitdauer der Melkphase (H) entspricht.

## Claims

1. Method for machine milking animals, in particular for milking sheep, wherein during a pre-milking phase (V) a part of the milk is milked from the gland cistern, wherein subsequently a teat of the animal is being stimulated during a stimulating phase (S) and wherein the stimulating phase (S) is followed by a milking phase (H).

2. Method according to claim 1, wherein the pre-milking phase has a duration of at least 5 seconds, preferably 7 seconds.

3. Method according to claim 1 or 2, wherein the pre-milking phase has a length of at most 30 seconds.

4. Method according to claim 1, 2, or 3, wherein during the stimulating phase (S) a tactile excitation of the teat is performed.

5. Method according to claim 4, wherein during the stimulating phase (S) a teat cup is connected with a pulsating device, wherein the pulsating frequency is at least 300 cycles per minute.

6. Method according to claim 5, wherein during the stimulating phase (S) a pressure difference of at least 5 kPa is formed between the inner volume of the teat cup and the intermediate volume of the teat cup.

7. Method according to one of claims 1 to 6, wherein the pre-milking phase (V) is performed in a different way than the milking phase (H) with respect to the duration, the pulsating frequency and/or the phase regulation of the pulsating device.

8. Method according to claim 1, 2, or 3, wherein a milking cluster with at least a teat cup being which is connected to a milk collecting piece by a line, is connected to the animal, wherein the milk collecting piece is connected to a working cylinder in such a way that a movement of the milk collecting piece is transmitted to the teat cup.

9. Method according to one of claims 1 to 7, wherein a milking phase (H) is followed by a further stimulating phase (S) which is followed by a further milking phase (H).

10. Method according to claim 9, wherein the duration of the individual stimulating phases (S) and/or the duration of the individual milking phases (H) are substantially the same.

11. Method according to claim 9, wherein the relation of times of the stimulating phase and the milking phase is ca. 2:1.

12. Method according to claim 9 or 10, wherein the duration of the pre-milking phase (S) is substantially the same as the duration of the stimulating phase (S) and/or the duration of the milking phase (H).

## Revendications

1. Procédé de traite mécanique d'animaux, notamment de moutons, dans lequel au cours d'une phase de tirage des premiers jets (V) une partie du lait est trait de la poche mammaire, au moins un pis de l'animal est ensuite stimulé lors d'une phase de stimulation (S) et dans lequel la phase de stimulation (S) est suivie d'une phase de traite (H).

2. Procédé suivant la revendication 1, dans lequel la phase de tirage des premiers jets a au moins une durée de 5 secondes, de préférence 7 secondes.

3. Procédé suivant la revendication 1 ou 2, dans lequel la phase de tirage des premiers jets a au maximum une durée de 30 secondes.

4. Procédé suivant la revendication 1, 2 ou 3, dans lequel une excitation tactile du pis est effectuée au cours de la phase de stimulation (S).

5. Procédé suivant la revendication 4, dans lequel au cours de la phase de stimulation (S) un gobelet trayeur est relié à un pulsateur, la fréquence de pulsateur comportant au moins 300 cycles par minute.

6. Procédé suivant la revendication 5, dans lequel au cours de la phase de stimulation (S) une différence de pression d'au moins 5 kPa est réalisée entre l'espace intérieur du gobelet trayeur et l'espace intermédiaire du gobelet trayeur.

7. Procédé suivant l'une des revendications 1 à 6, dans lequel la phase de tirage des premiers jets (V) est réalisée de manière différente de la phase de traite (H) quant à la durée, la fréquence de pulsateur et/ou la commande des phases de pulsateur.

8. Procédé suivant la revendication 1, 2 ou 3, dans lequel un pot trayeur avec au moins un gobelet trayeur, qui par une conduite est relié à une pièce collectrice de lait, est appliqué sur l'animal, la pièce collectrice de lait étant reliée de telle manière à un cylindre de travail qu'un mouvement de la pièce collectrice de lait est transmis au gobelet trayeur.

9. Procédé suivant l'une des revendications 1 à 7, dans lequel une phase de traite (H) est suivie d'une autre phase de stimulation (S) laquelle est suivie d'une autre phase de traite (H).

10. Procédé suivant la revendication 9, dans lequel la durée des phases de stimulation (S) individuelles et/ou la durée des phases de traite (H) individuelles ont sensiblement la même longueur.

11. Procédé suivant la revendication 9, dans lequel le rapport temporel entre la phase de stimulation et la phase de traite comporte environ 2 : 1.

12. Procédé suivant la revendication 9 ou 10, dans lequel la durée de la phase de tirage des premiers jets (V) correspond sensiblement à la durée de la phase de stimulation (S) et/ou à la durée de la phase de traite (H).
